# EUROPÄISCHE PATENTANMELDUNG

(11) **EP 1 396 965 A1**
(43) Veröffentlichungstag der Anmeldung: **10.03.2004**
(21) Anmeldenummer: 02019920.4
(22) Anmeldetag: 04.09.2002
(51) Int. Cl.: H04L 12/56, H04L 29/08

(54) **Verfahren und Vorrichtung zum Übertragen von Dienstegüte- und Adressinformationen in einem Kommunikationssystem bei bidirektionaler Kommunikation**

(71) Anmelder: SIEMENS AKTIENGESELLSCHAFT, 80333 München (DE)
(72) Erfinder: Dauerer, Joerg, 82194 Gröbenzell (DE); Waldhauser, Richard, 81249 München (DE)

(57) **Zusammenfassung**

Die Erfindung bezieht sicht auf ein Verfahren zum Übertragen von Informationen in einem Kommunikationssystem (UMTS;WLAN) mit einer Vielzahl von Kommunikationssystems-Einrichtungen, welche zum Aufbau und Unterhalten einer Verbindung (VIP,RIP) über ein Datennetz (IP) miteinander verbunden sind, wobei
- eine erste der Kommunikationssystem-Einrichtungen (RNC;AP) über eine Zusatz- und/oder Adressinformation (X;S) bezüglich der ersten Verbindung (VIP) verfügt,
- eine zweite der Kommunikationssystem-Einrichtungen (NodeB;SV) über diese Zusatz- oder Adressinformation (X;S) bezüglich der ersten Verbindung nicht verfügt und
- die erste Kommunikationssystem-Einrichtung die Information (X;S) in ein Datenpaket (VP) einsetzt, das zu der zweiten der Kommunikationssystem-Einrichtung übertragen wird.

Um in der Vorwärtsrichtung empfangene Informationen auch für Verbindungen in Rückwärtsrichtung verfügbar zu machen, so dass zwischengeschaltete Router (IPR) auf der Verbindungsstrecke in Rückwärtsrichtung ebenfalls über diese Information verfügen können, wird vorgeschlagen, dass die zweite Kommunikationssystem-Einrichtung (NodeB;SV) die von der ersten Kommunikationssystem-Einrichtung (RNC;AP) empfangene Information (X;S) als Zusatz- und/oder Adressinformation (X;D) in ein Datenpaket (RP) einsetzt, das die zweite Kommunikationssystem-Einrichtung (NodeB;SV) über eine auf die erste Verbindung (VIP) bezogenen zweite Verbindung (RIP;V) zu übertragen ist.

## Beschreibung

Die Erfindung bezieht sich auf ein Verfahren zum Übertragen von Informationen in einem Kommunikationssystem mit den oberbegrifflichen Merkmalen des Patentanspruchs 1 sowie eine Kommunikationssystem-Vorrichtung zum Durchführen eines solchen Verfahrens.

Bei Kommunikationssystemen findet eine Kommunikation zwischen teilnehmerseitigen Datenendgeräten, z. B. Mobilfunkgeräten oder funkgestützten Rechnern, über eine Vielzahl zwischengeschalteter Stationen und Einrichtungen eines Kommunikationsnetzes statt. Bei Kommunikationssystemen wie dem UMTS (Universal Mobile Telecommunications System) werden dabei Übertragungen einer aufgebauten Verbindung z. B. über eine Teilstrecke von einer Funknetz-Steuereinheit (RNC: Radio Network Controller) zu einer Sende- und Empfangsstation (NodeB) übertragen. Die Sende- und Empfangsstation dient zum Aufbau einer Funkverbindung zu einer teilnehmerseitigen Station. Die Funknetz-Steuereinrichtung dient zum Koordinieren verschiedener Sende- und Empfangsstationen sowie zum Weiterleiten von Daten zu bzw. von der teilnehmerseitigen Station in Richtung einer weiteren teilnehmerseitigen Station in diesem oder einem anderen Kommunikationssystem.

Insbesondere auf der Verbindungsstrecke zwischen der Funknetz-Steuereinrichtung und der Sende- und Empfangsstation besteht oftmals die Situation, dass gewisse Informationen bezüglich der Verbindung oder der zu übertragenden Daten oder Datendienste nur auf einer Seite der Verbindung vorhanden sind, für eine optimale Verarbeitung oder Weiterleitung der Daten aber auf beiden Seiten benötigt werden. Beispielsweise ist die Information über eine geforderte Dienstequalität bestimmter Verbindungen, z. B. die maximal zulässige Übertragungsverzögerung von Daten einer bestimmten Verbindung, nur in der Funknetz-Steuereinrichtung, nicht aber in der Sendeund Empfangsstation vorhanden. Wenn Daten bzw. eine Information zur teilnehmerseitigen Station zu übertragen sind und bei der Funknetz-Steuereinrichtung oder einer anderen von dieser gesteuerten Einrichtung eintreffen, kann diese Information als Zusatzinformation zusammen mit den Daten an die Sende- und Empfangsstation und über diese bei Bedarf an die teilnehmerseitige Station weitergeleitet werden. Werden jedoch Daten von der teilnehmerseitigen Station über eine entsprechend parallel aufgebaute Verbindung in umgekehrter Richtung übertragen, so können derartige Zusatz-Informationen von der Sende- und Empfangsstation nicht in Richtung der Funknetz-Steuereinrichtung oder anderer von dieser verwalteter Stationen weitergeleitet werden. Für einen effektiven Austausch der Daten über eine derartige bidirektionale Verbindung, die aus zwei einzelnen Verbindungen in entgegengesetzter Richtung zwischen den Kommunikationsteilnehmern besteht, hier z. B. der Funknetz-Steuereinrichtung und der Sende- und Empfangsstation, müssen jedoch beide Kommunikationsteilnehmer die Information über die für die Verbindung geforderte Qualität haben.

Üblicherweise erfolgt eine entsprechende gegenseitige Information der beteiligten Stationen bzw. Einrichtungen dadurch, dass Parameter, welche die Zusatzinformation, wie z. B. die geforderte Qualität, beschreiben, beim Aufbau der bidirektionalen Verbindung bzw. der Verbindung in Gegenrichtung zwischen den Kommunikationsteilnehmern über eine separate Verbindung ausgetauscht bzw. signalisiert werden. Dies macht neben dem Aufbau einer separaten Signalisierungsverbindung auch Aufwand bei der Verwaltung eines Verbindungsaufbaus.

Ein anderes beispielhaftes Kommunikationssystem mit derselben Problematik ist ein Datennetz mit einer Steuerung gemäß z. B. dem Internetprotokoll (IP). Über eine funkgestützte oder kabelgebundene Schnittstelle kommunizieren Rechner, beispielsweise sogenannte mobile Hosts mit einer Netzzugangsstation bzw. einem sogenannten Zugriffspunkt. Von dem Zugriffspunkt aus werden Datenverbindungen zu einem Server aufgebaut, welcher z.B. von dem Rechner als teilnehmerseitiger Station angeforderte Daten enthält. Nach einer Datenanforderung stellt der Server entsprechende Daten bereit und sendet diese in Rückwärtsrichtung zu einem Heimatagenten, von welchem die teilnehmerseitige Station verwaltet wird. Der Heimatagent, der stets über den Aufenthaltsort der teilnehmerseitigen Station informiert ist, leitet dann die Daten an den zuständigen Zugriffspunkt weiter, über welchen die Daten letztendlich an die anfordernde teilnehmerseitige Station übersendet werden.

Bei einem solchen Kommunikationssystem, z. B. einem sogenannten funkgestützten lokalen Datennetz (WLAN: Wireless Local Area Network) findet somit zum Aufbau der Rückverbindung ein indirekter Verbindungsaufbau über eine weitere Station statt, welche Datenpakete dann entsprechend weiterleitet.

Bei Paket-Datenverbindungen, welche auf beispielsweise dem Internet-Protokoll basieren, kann z. B. die geforderte Qualität der Verbindungen als Zusatz-Information durch ein bestimmtes Feld im Paket-Kopfabschnitt (Header) jedes Datenpaketes angezeigt werden. Ein solches Feld ist z. B. das sogenannte Servicetype-Feld (TOS: Type Of Service field), welches in jedem IP-Kopfabschnitt vorhanden ist. Bei einer Kommunikation zwischen der Funknetz-Steuereinrichtung und der Sendeund Empfangsstation in dem einleitend beschriebenen Kommunikationssystem gemäß UMTS kann die Funknetz-Steuereinrichtung bei IP-basierter Datenübertragung durch einen Eintrag in dem Feld für die Zusatz-Information des Kopfabschnitts z. B. die geforderte Verbindungsqualität festlegen, da diese Qualitätsinformation in der Funknetz-Steuereinrichtung verfügbar ist.

Diese Grundproblematik besteht bei einer Vielzahl verschiedenartigster Kommunikationssysteme, welche für einen Teil oder die Gesamtheit der Kommunikationsverbindungen zwischen einzelnen beteiligten Stationen und Einrichtungen auf das Internet-Protokoll oder vergleichbare Protokolle zurückgreifen.

Die Aufgabe der Erfindung besteht darin, ein Verfahren zum Übertragen von Zusatz-Informationen zu vereinfachen bzw. eine Kommunikationssystem-Vorrichtung zum Durchführen eines solchen Verfahrens vorzuschlagen.

Diese Aufgabe wird durch ein Verfahren zum Übertragen von Informationen in einem Kommunikationssystem mit den Merkmalen des Patentanspruchs 1 bzw. eine Kommunikationssystem-Vorrichtung mit den Merkmalen des Patentanspruchs 11 gelöst.

Die Verfahrensweise bzw. die entsprechende Kommunikationssystem-Vorrichtung, bei der eine Zusatzinformation bezüglich einer Verbindung in einer diese Zusatzinformation empfangenden Station beim Aufbau einer Rückverbindung bzw. beim Übertragen von Datenpakten, welche über eine derartige Rückverbindung zu senden sind, eingesetzt wird, ermöglicht eine direkte Übertragung der Datenpakete in Rückwärtsrichtung ohne den Einsatz einer zusätzlichen Signalisierung über eine separate Verbindung oder gar den Versand des Datenpaketes zu einer weiteren Einrichtung, welche dann wiederum eine Weiterleitung des Datenpaktes an die anfordernde Station ermöglicht. Das Nutzen einer Zusatz-Information aus einem empfangenen Datenstrom kann somit für das Versenden eines Datenstroms in Gegenrichtung den Aufbau bidirektionaler Kommunikationsverbindungen bzw. den Versand von Datenpaketen über solche deutlich vereinfachen.

Anstelle der empfangenen Zusatz-Information kann empfängerseitig auch eine daraus abgeleitete Information in Datenpakete eingesetzt werden, welche in Rückwärtsrichtung zu übertragen sind. Eine anderer Wert als Zusatz-Information könnte beispielsweise einzusetzen sein, wenn in der Rückwärtsrichtung eine andere Dienstegüte erforderlich ist als sie in der Vorwärtsrichtung verwendet wurde.

Vorteilhafte Ausgestaltungen sind Gegenstand von abhängigen Ansprüchen.

Als das Datennetz kann ein fremdes Netz durch das Einsetzen der Zusatz-Information in Datenpakete für die Rückwärtsrichtung direkt verwendet werden, ohne dass parallele Verbindungen gemäß speziellen Standards des Kommunikationssystems aufgebaut und unterhalten werden müssen. Unter einem fremden Netz wird insbesondere ein Netz verstanden, welches gegenüber dem eigentlichen Kommunikationssystem als fremdes Netz anzusehen ist, also mit einem speziellen Standard arbeitet, welcher nicht typisch für den restlichen Teil des Kommunikationssystems ist.

Zweckmäßigerweise wird die Zusatz-Information in den empfangenden Stationen zwischengespeichert, so dass die Zusatz-Information in Datenpakete für die Übertragung in Rückwärtsrichtung fortwährend eingesetzt werden kann. Insbesondere ist es möglich, nicht nur unmittelbar auf eine Anforderung zurückgesendete Datenpakete mit der Zusatz-Information zu versehen, sondern auch zum Anforderungszeitpunkt zeitlich versetzt zu übertragende Datenpakete in Rückwärtsrichtung mit der Zusatz-Information zu versehen.

Vorteilhafterweise wird die Zusatz-Information auf diese Art und Weise direkt auf der Transportschicht des Datennetzes übertragen, so dass logische Steuerverbindungen nicht verwendet werden müssen.

Als Zusatz-Information kann beispielsweise eine Übertragungsqualität, insbesondere eine erforderliche Dienstegüte übertragen werden. Vorteilhafterweise wird dabei für Verbindungen mit mehreren möglichen Übertragungsqualitäten die strengst mögliche Übertragungsqualität als Kriterium angesetzt, so dass sichergestellt ist, dass jedes Datenpaket unabhängig von einer möglicherweise höheren oder geringeren erforderlichen Übertragungsqualität in jedem Fall mit der ausreichenden Übertragungsqualität weitergeleitet wird.

Vorteilhafterweise kann bei der Übertragung eine Quelladresse aus der ersten Verbindung als Zusatz-Information abgespeichert werden und für Datenpakete in Rückwärtsrichtung als Zieladresse des Datenpaketes eingetragen werden. Dadurch kann die Umleitung von Datenpaketen über eine separate Einrichtung wie einen Heimatagenten vermieden werden, solange eine anfordernde Station über die ursprüngliche Quelladresse erreichbar ist. Der Umweg über den Heimatagenten wird erst für den Fall erforderlich, dass die anfordernde Station ihre Quelladresse geändert hat, was beispielsweise nach einem Standortwechsel und Netzzugang über einen anderen Zugriffspunkt der Fall ist.

Als zweite Verbindung für die Rückwärtsrichtung kann entsprechend eine Rückverbindung zwischen netzseitigen Stationen bzw. Einrichtungen eines Funk-Kommunikationssystems gemäß z. B. UMTS angesehen werden. Die zweite Verbindung kann beispielsweise auch eine Verbindung zu einer weiteren Station, insbesondere zu einer Funk-Endstation sein, wie z. B. einem mobilen Host oder einem mobilen Funktelefon. Als zweite Verbindung kann beispielsweise auch eine Verbindung zwischen einer teilnehmerseitigen Datenstation und einem Datenserver angesehen werden.

Das Verfahren bzw. die Kommunikationssystem-Vorrichtung ermöglichen somit eine implizite Signalisierung von z. B. Dienstegütemerkmalen einer IP-Transportverbindung in UMTS durch beispielsweise die Verwendung des Servicetyp-Feldes in dem IP-Kopfabschnitt von Datenpaketen. Dabei ist das Einsetzen von Zusatz-Information in Datenpakete in Rückwärtsrichtung eine einfache Lösung, die in bestehenden und zukünftigen Kommunikationssystemeinrichtungen ohne großen Hard- und Softwareaufwand implementiert werden kann.
Ausführungsbeispiele werden nachfolgend anhand der Zeichnungen näher erläutert. Es zeigen:
- Fig. 1: beispielhafte Stationen eines Kommunikationssystems gemäß einem ersten Ausführungsbeispiel und
- Fig. 2: eine Anordnung von Stationen sowie eine Skizzierung von Verfahrensabläufen gemäß einem zweiten Ausführungsbeispiel.

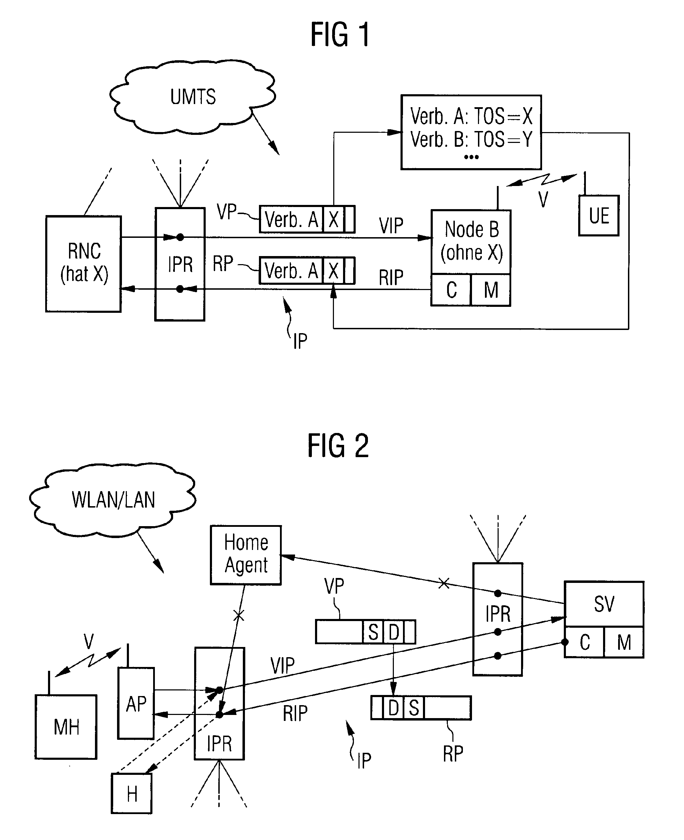

Wie aus Fig. 1 ersichtlich, ist an der Übertragung von Daten in einem Kommunikationssystem eine Vielzahl von Einrichtungen und Stationen beteiligt, von denen nur Einzelne zur Veranschaulichung des Verfahrensablaufs dargestellt sind. Beispielhaft für ein Kommunikationssystem sind dabei Einrichtungen des UMTS (Universal Mobil Telecommunications System) dargestellt.

Um von einer teilnehmerseitigen Station UE, insbesondere einem zellularen Funktelefon, Daten zu versenden oder zu empfangen, wird eine Funkverbindung V mit einer netzseitigen Zugangsstation, welche als Sende- und Empfangsstation NodeB dient, aufgebaut. Von der netzseitigen Sende- und Empfangsstation NodeB wird eine weitere Verbindung, insbesondere kabelgestützte Verbindung VIP, RIP zu einer Funknetz-Steuereinrichtung RNC aufgebaut. Die Funknetz-Steuereinrichtung RNC verwaltet üblicherweise eine Vielzahl derartiger Sende- und Empfangsstationen NodeB. Außerdem weist die Funknetz-Steuereinrichtung RNC direkt oder indirekt Verbindungen zu verschiedenen anderen Einrichtungen und Stationen des Kommunikationssystems UMTS auf, beispielsweise Verbindungen zu Heimatregistern, Besucherregistern, einem System- und Wartungszentrum und Schnittstellen zu andersartigen Kommunikationssystemen. Eine von der teilnehmerseitigen Station UE ausgehende oder zu der teilnehmerseitigen Station UE führende Verbindung wird üblicherweise zwischen der teilnehmerseitigen Station UE über die Sende- und Empfangsstation NodeB zu der Funknetz-Steuereinrichtung RNC aufgebaut und von dort aus zu einem gewünschten Kommunikationspartner der teilnehmerseitigen Station UE weitergeleitet. Der Kommunikationspartner kann dabei eine andere solche teilnehmerseitige Station UE an der gleichen Sende- und Empfangsstation NodeB einer anderen Sende- und Empfangsstation oder in einem anderen Kommunikationssystem sein.

Die Funkschnittstelle V zwischen der Sende- und Empfangsstation NodeB und der teilnehmerseitigen Station UE wird gemäß den Vorgaben des Kommunikationssystems UMTS aufgebaut und unterhalten. Die Verbindung zwischen der Sende- und Empfangsstation NodeB und der Funknetz-Steuereinrichtung RNC wird hingegen über eine Verbindung aufgebaut, welche den Vorgaben eines Datennetzes unterliegt. Im Fall des UMTS als Kommunikationssystem kann diese netzseitige Verbindung zwischen der Sende- und Empfangsstation NodeB und der Funknetz-Steuereinrichtung RNC gemäß dem sogenannten Internet-Protokoll IP erfolgen. Dabei werden Daten in Datenpaketen von der Funknetz-Steuereinrichtung RNC zur Sende- und Empfangsstation NodeB über eine vorwärtsgerichtete Verbindung VIP in Vorwärtsrichtung übertragen. Ein typisches Datenpaket besteht dabei aus einem Kopfabschnitt und einem Datenabschnitt, wobei im Kopfabschnitt Informationen über die Quelladresse, die Zieladresse und Information bezüglich der Daten im Nutzdatenabschnitt enthalten sind. Ferner wird eine Verbindung RIP in Rückwärtsrichtung zwischen der Sende- und Empfangsstation NodeB und der Funknetz-Steuereinrichtung RNC aufgebaut, über die Daten in Datenpaketen verpackt in Rückwärtsrichtung übertragen werden.

Bei derartigen Datennetzen ist die Zwischenschaltung von Leit- und Verteilungseinrichtungen, insbesondere sogenannten Routern IPR üblich. In einem Router IPR eintreffende Datenpakete werden hinsichtlich der Zieladresse und gegebenenfalls hinsichtlich Zusatzinformation untersucht und dann über eine geeignete Ausgangsleitung in Richtung der Zieladresse weitergeleitet. Dabei können Vorgaben berücksichtigt werden, welche sich aus der Zusatz-Information X ergeben. Beispielsweise kann die Zusatz-Information eine Angabe über eine mindest erforderliche Verbindungsqualität aufweisen, so dass seitens des Routers IPR eine Verbindung ausgewählt wird, über welche ein eingetroffenes Datenpaket VP, RP in Richtung der gewünschten Zieladresse bevorzugt weitergeleitet wird. Möglich ist auch die Reservierung einer solchen Verbindung für nur noch eine begrenzte Anzahl von Datenpaketen, um diese mit erhöhter Priorität und Übertragungssicherheit weiterleiten zu können.

Bei dem in Fig. 1 dargestellten Ausführungsbeispiel wird nachfolgend davon ausgegangen, dass in der Funknetz-Steuereinrichtung RNC ein Datenpaket eingetroffen ist, welches mit z. B. einer bestimmten mindest erforderlichen Verbindungsqualität zu übertragen ist. In der Sende- und Empfangsstation NodeB ist diese Information nicht vorhanden. Die Funknetz-Steuereinrichtung RNC kann eine Zusatz-Information X durch das Einsetzen dieser entsprechenden Zusatz-Information X in das entsprechende Feld in den Kopfabschnitt des Datenpakets VP zu der dieses Datenpaket VP empfangenden Sende- und Empfangsstation NodeB übertragen. Dadurch wird die Sende- und Empfangsstation NodeB in die Lage versetzt, die durch die Zusatz-Information X vorgegebenen Bedingungen bei der weiteren Verarbeitung des Datenpakets bzw. der darin enthaltenen Daten zu berücksichtigen.

Bei einer Übertragung in Rückwärtsrichtung von der teilnehmerseitigen Station UE über die Funkschnittstelle V zur Sende- und Empfangsstation NodeB fehlte eine entsprechende Zusatz-Information, welche für die weitere Verbindungsstrecke, d. h. die Verbindung in Rückwärtsrichtung RIP zur Funknetz-Steuereinrichtung RNC in weiterzuleitende Datenpakete RP einsetzbar ist. Um für eine solche Verbindung RIP in Rückwärtsrichtung trotzdem eine entsprechende Weiterleitung von Datenpaketen RP in Rückwärtsrichtung gemäß den Vorgaben des Transports von Datenpaketen VP in Vorwärtsrichtung zu ermöglichen, ermittelt die Sende- und Empfangsstation NodeB die entsprechende Zusatzinformation X aus in Vorwärtsrichtung eintreffenden Datenpaketen VP von der vorwärtsgerichteten Verbindung VIP und speichert diese Zusatz-Information X in ihrem Speicher M ab. Für den Versand von Datenpaketen RP in Rückwärtsrichtung über die Verbindung RIP zur Funknetz-Steuereinrichtung RNC liest die Sende- und Empfangsstation NodeB die Zusatz-Information X aus ihrem Speicher M aus und setzt diese Zusatz-Information X in die in Rückwärtsrichtung zu versendenden Datenpakete PR in das entsprechende Feld im Kopfabschnitt (TOS) der Datenpakete ein. Dadurch kann auch auf der Verbindung RIP in Rückwärtsrichtung die Zusatz-Information X bei dem Transport und der Weiterleitung der Datenpakete RP in Rückwärtsrichtung berücksichtigt werden. Insbesondere kann die Zusatz-Information X durch Router IPR berücksichtigt werden, welche sich auf der Verbindungsstrecke zwischen der Sende- und Empfangsstation NodeB und der Funknetz-Steuereinrichtung RNC befinden. Um das Verwalten, insbesondere Auslesen, Zwischenspeichern und Einsetzen der Zusatz-Information X zu ermöglichen wird vorteilhafterweise die Steuereinrichtung C der Sende- und Empfangsstation NodeB um eine entsprechende Hardware- und/oder Softwarekomponente erweitert.

Für den Fall, dass es sich bei der aufgebauten Verbindung RIP in Rückwärtsrichtung zwischen der Sende- und Empfangsstation NodeB und der Funknetz-Steuereinrichtung RNC um eine unidirektionale Verbindung handelt, welche die Sende- und Empfangsstation NodeB verlässt, wird ein einheitlicher Standardwert in die entsprechenden Felder des Kopfabschnitts der Datenpakete RP eingesetzt. Vorzugsweise wird dabei in das entsprechende Kopfabschnittsfeld TOS des Datenpakets RP ein Wert eingetragen, welcher die strengsten Bedingungen voraussetzt, die für Einzelne aus einer Vielzahl zu übertragender Datenpakete auf dieser Verbindung RIP in Rückwärtsrichtung möglich sind. Dadurch kann sichergestellt werden, dass alle Datenpakete RP bestmöglich weitergeleitet werden.

Alternativ ist auch das Einsetzen eines anderen Standard-Wertes in das entsprechende Kopfabschnittsfeld (TOS) möglich, beispielsweise dann, wenn nur selten ein Datenpaket RP in Rückwärtsrichtung zu übertragen ist, welches sehr hohe Anforderungen an die Verbindungsqualität stellt, so dass mit Blick auf die Vielzahl von Datenpaketen RP mit geringen Qualitätsanforderungen eine seltene wiederholte Übertragung eines unzureichend empfangenen Datenpakets RP mit hohen Qualitätsanforderungen in Kauf genommen werden kann.

Bei dieser Verfahrensweise wird somit eine implizit in der Sende- und Empfangsstation NodeB empfangene Zusatz-Information X zwischengespeichert und für Übertragungen in der Gegenrichtung verwendet, so dass auch in der Gegenrichtung bzw. Rückwärtsrichtung die Zusatz-Information X in den Datenpaketen RP enthalten ist. Eine explizite Signalisierung der Zusatz-Information X über eine separate Signalisierungsverbindung ist entbehrlich. In Fällen, bei denen eine separate Signalisierung gar nicht vorgesehen ist, ermöglicht die beschriebene Verfahrensweise überhaupt erst die Berücksichtigung von Übertragungsparametern durch die in Rückwärtsrichtung mit übertragene Zusatz-Information X, so dass auch in solchen Fällen bei einer bidirektionalen Kommunikation die entsprechende Kommunikationsparameter in beiden Kommunikationsrichtungen verfügbar sind.

Vorteilhafterweise wird die Zusatz-Information X bei dieser Verfahrensweise direkt implizit auf der Transportschicht übertragen, wobei zwischengeschaltete Stationen, insbesondere Router IPR aus weiterzuleitenden Datenpaketen RP in Rückwärtsrichtung die entsprechende Zusatz-Information X ableiten können, welche ansonsten Mangels einer Signalisierungsverbindung auf einer höheren Schicht des Transportprotokolls nicht verfügbar wäre oder nur aufwendig zu beschaffen wäre.

Während bei dem Ausführungsbeispiel gemäß Fig. 1 eine Zusatz-Information X aus einem Datenpaket VP von einer Verbindung VIP in Vorwärtsrichtung in der empfangenden Sende- und Empfangsstation NodeB in Datenpakete RP gespiegelt wird, welche über eine Verbindung RIP in Rückwärtsrichtung zu der Funknetz-Steuereinrichtung RNC zurückzuübertragen sind, sind auch andere Anwendungsmöglichkeiten möglich, die auf diesem Grundgedanken basieren.

Wie aus Fig. 2 ersichtlich, kann die Verfahrensweise z. B. auch auf eine Situation angewendet werden, bei der ein mobiler funkgestützter Computer, auch als mobiler Host MH bezeichnet, über eine funkgestützte Verbindung V auf einen Zugriffspunkt AP eines lokalen funkgestützten Datennetzes WLAN zugreift, um dann über das Datennetz WLAN mit einem entfernten Server SV zu kommunizieren. Das Datennetz ist beim dargestellten Ausführungsbeispiel wiederum ein Datennetz WLAN mit einer Datenübertragung gemäß dem Internet-Protokoll IP und weist auf der Verbindungsstrecke VIP, RIP üblicherweise einen oder mehrere Router IPR auf. Wiederum können die Verbindung VIP in Vorwärtsrichtung von dem Zugriffspunkt AP zum Server SV und die entsprechende Verbindung RIP in Rückwärtsrichtung vom Server SV zum Zugriffspunkt AP bzw. über diesen hinaus zum mobilen Host MH als bidirektionale oder als einzelne unidirektionale Verbindungen aufgebaut werden.

Alternativ zu dem dargestellten mobilen Host MH, welcher über die Funkschnittstelle V mit dem Zugriffspunkt AP kommuniziert, kann auch ein Host H direkt über den Zugriffspunkt AP oder einen Router IPR an das Datennetz WLAN angeschlossen werden. Ein solcher Host H kann insbesondere direkt über das Internet-Protokoll IP mit dem Datennetz WLAN kommunizieren, so dass die Funkschnittstellen-Technologie nicht erforderlich ist.

Bei dem Einsatz eines mobilen Host MH und eines Datennetzes WLAN mit mehreren Zugriffspunkten AP, AP2 bei denen sich der mobile Host MH zum. Verbindungsaufbau anmelden kann, besteht das Problem, dass die vom Server SV durch den mobilen Host MH angeforderten Datenpakete RP in Rückwärtsrichtung über den Heimatagenten HA übertragen werden, welcher stets Kenntnis über den Aufenthaltsort des mobilen Host MH und damit stets Kenntnis von dessen momentaner Adresse hat.

Unter der Annahme, dass der mobile Host MH für eine ausreichende Zeit nach der Anforderung eines Datenpakets RP über den gleichen Zugriffspunkt AP erreichbar ist, ändert sich die Zieladresse D für die Datenpakete RP in Rückwärtsrichtung nicht. Daher kann der Server SV nach dem Empfang eines Datenpakets VP von dem mobilen Host MH die Quelladresse S des empfangenen Datenpakets VP auslesen und ggf. in dem Speicher M des Servers zwischenspeichern.

Für die Übertragung in Rückwärtsrichtung bereitgestellte Datenpakete RP, welche der Server SV zu dem mobilen Host MH sendet, wird anschließend vom Server SV anstelle der Adresse des Heimatagenten HA und einer den mobilen Host MH eindeutig identifizierenden Information die ursprüngliche Quelladresse S als Zieladresse D in die Datenpakete RP eingesetzt.

Für die Durchführung der entsprechenden Funktionalität wird vorzugsweise die Steuereinrichtung C des Servers SV um entsprechende Hardware- und/oder Softwarekomponenten erweitert, welche das Auslesen der Quelladresse S aus einem empfangenen Datenpaket VP, das Zwischenspeichern der Quelladresse S in Art einer Zusatz- oder Adressinformation im Speicher M und das Einsetzen der Quelladresse S als Zieladresse D in ein in Rückwärtsrichtung zu versendendes Datenpaket RP steuern.

Eine Übertragung der Datenpakete RP in Rückwärtsrichtung über den Heimatagenten HA kann somit bis auf die Fälle ausgelassen werden, bei denen sich der mobile Host MH aus dem Sendebereich des ursprünglichen Zugriffspunkte AP wegbewegt hat oder aus einem anderen Grund eine neue Zieladresse zugewiesen bekommen hat. Insbesondere kann der Server SV zusätzlich eine Empfangsbestätigung bei dem mobilen Host MH anfordern, so dass im Fall einer ausbleibenden Empfangsbestätigung ein wiederholter Datenversandt eines identischen in Rückwärtsrichtung übertragenen Datenpakets RP über den üblichen Weg unter Zwischenschaltung des Heimatagenten HA durchgeführt werden kann.

Während bei dem ersten Ausführungsbeispiel die von der Sendeund Empfangsstation NodeB in Rückwärtsrichtung zu übertragenden Datenpakete RP von der teilnehmerseitigen Station UE über die Funkschnittstelle V zur Weiterleitung empfangen wurden, bestehen die Datenpakete RP in Rückwärtsrichtung bei dem zweiten Ausführungsbeispiel aus Daten, welche entweder im Server selber, insbesondere in dessen Speicher M, bereitgestellt oder von dem Server SV von einer anderen Datenquelle beschafft wurden.

## Patentansprüche

1. Verfahren zum Übertragen von Informationen in einem Kommunikationssystem (UMTS; WLAN) mit einer Vielzahl von Kommunikationssystems-Einrichtungen (RNC, NodeB; AP, SV, HA), welche zum Aufbau und Unterhalten einer Verbindung (VIP, RIP) über ein Datennetz (IP) miteinander verbunden sind, wobei
- eine erste der Kommunikationssystem-Einrichtungen (RNC; AP) über eine Zusatz- und/oder Adressinformation (X; S) bezüglich der ersten Verbindung (VIP) verfügt,
- eine zweite der Kommunikationssystem-Einrichtungen (NodeB; SV) über diese Zusatz- oder Adressinformation (X; S) bezüglich der ersten Verbindung (VIP) nicht verfügt und
- die erste Kommunikationssystem-Einrichtung (RNC; AP) die Zusatz- und/oder Adressinformation (X; S) in alle Datenpakete (VP) oder zumindest ein Datenpaket (VP) einsetzt, das zu der zweiten Kommunikationssystem-Einrichtung (NodeB; S) übertragen wird,
**dadurch gekennzeichnet, dass**
- die zweite Kommunikationssystem-Einrichtung (NodeB; S) die von der ersten Kommunikationssystem-Einrichtung (RNC; AP) empfangene Zusatz- und/oder Adress-Information (X; S) oder eine daraus abgeleitete Information als Zusatz- und/oder Adressinformation (X; D) in ein Datenpaket (RP) einsetzt, welches durch die zweite Kommunikationssystem-Einrichtung (NodeB; SV) über eine auf die erste Verbindung (VIP) bezogene zweite Verbindung (RIP; V) zu übertragen ist.

2. Verfahren nach Anspruch 1, bei dem
als das Datennetz (IP) ein gegenüber dem sonstigen Kommunikationssystem (UMTS; WLAN) fremdes Netz, insbesondere fremdes Netz gemäß dem Internet-Protokoll verwendet wird.

3. Verfahren nach Anspruch 1 oder 2, bei dem
die zweite Kommunikationssystem-Einrichtung (NodeB; SV) die Zusatz- und/oder Adress-Information (X; S) zwischenspeichert, solange die erste Verbindung (VIP) besteht oder diesbezüglich eine solche zweite Verbindung (RIP; V) noch aufzubauen ist oder Datenpakete (RP) über eine solche zweite Verbindung (RIP; V) zu versenden sind.

4. Verfahren nach einem vorstehenden Anspruch, bei dem
die Zusatz- und/oder Adressinformation (X; S) auf der Transportschicht des Datennetzes (IP) übertragen wird.

5. Verfahren nach einem vorstehenden Anspruch, bei dem
als Zusatz-Information (X) eine mindest erforderliche Übertragungsqualität, insbesondere Dienstegüte übertragen wird.

6. Verfahren nach einem vorstehenden Anspruch, bei dem
als Zusatz-Information (X) mit verschiedenen möglichen Anforderungskriterien die strengsten Anforderungskriterien für eventuell mögliche Übertragungen auf der zweiten Verbindung (RIP) verwendet werden, insbesondere bei einer zweiten Verbindung (RIP) in Rückwärtsrichtung, welche als unidirektionale Verbindung aufgebaut wird.

7. Verfahren nach einem vorstehenden Anspruch, bei dem
als Adress-Information (S, D) eine Quelladresse (S) in der ersten Verbindung (VIP) in Vorwärtsrichtung als eine der Quell-Adresse (S) identische Zieladresse (D) in dem Datenpaket (RP) für die zweite Verbindung (RID) in Rückwärtsrichtung verwendet wird.

8. Verfahren nach einem vorstehenden Anspruch, bei dem
als zweite Verbindung in Rückwärtsrichtung eine Verbindung (RIP) zwischen zwei netzseitigen Einrichtung eines Kommunikationssystems, insbesondere UMTS (Universal Mobil Telecommunications System) aufgebaut wird, wobei verbindende und verteilende Stationen, insbesondere Router (IPR), zwischengeschaltet werden.

9. Verfahren nach einem vorstehenden Anspruch, bei dem
als zweite Verbindung eine Verbindung (V) zu einer weiteren Station, insbesondere Funk-Endstation (UE; WH), jenseits eines Zugriffspunkts (NodeB; AP) einer Endstation des Datennetzes (IP) verwendet oder zusätzlich verwendet wird.

10. Verfahren nach einem vorstehenden Anspruch, bei dem
als zweite Verbindung eine Verbindung (RIP) zwischen einer teilnehmerseitigen Datenstation (GH; H) und/oder einer damit kommunizierenden Zugriffsstation (AP) bzw. Verbindungsstation (IPR) einerseits und einem Datenserver (SV) andererseits verwendet wird.

11. Kommunikationssystemvorrichtung (NodeB; SV), insbesondere zum Durchführen eines Verfahrens nach einem vorstehenden Anspruch, mit
- einer Datennetz-Verbindung (VIP, RIP) von bzw. zu einer anderen Einrichtung des Kommunikationssystems (RNC; AP, MH),
- einer Steuereinrichtung (C) zum Betreiben der Kommunikationssystemvorrichtung,
- einem Speicher (M) zum Abspeichern von Informationen (X; S, D) bezüglich zu übertragender Daten und Datenpakete (VP, RP), **dadurch gekennzeichnet,**
- **dass** die Steuereinrichtung (C) ausgelegt ist, eine Zusatzund/oder Adress-Information (X; S) oder eine daraus abgeleitete Information aus einem in Vorwärtsrichtung empfangenen Datenpaket (VP) in ein zugehöriges Datenpaket (RP) in Rückwärtsrichtung als Zusatz- und/oder Adress-Information (X; D) einzusetzen.
